# EUROPÄISCHE PATENTANMELDUNG

(11) **EP 3 944 947 A1**
(43) Veröffentlichungstag der Anmeldung: **02.02.2022**
(21) Anmeldenummer: 20187917.8
(22) Anmeldetag: 27.07.2020
(51) Int. Cl.: B29C 45/28, B29C 45/27, B29C 45/38

(54) **VORRICHTUNG ZUR HERSTELLUNG EINES KUNSTSTOFFBAUTEILS**

(71) Anmelder: ZKW Group GmbH, 3250 Wieselburg (AT)
(72) Erfinder: Fühauf, Johannes, 3293 Lunz am See (AT); Prager, Christian, 3340 Waidhofen/Ybbs (AT)
(74) Vertreter: Patentanwaltskanzlei Matschnig & Forsthuber OG

(57) **Zusammenfassung**

Vorrichtung (10) zur Herstellung eines Kunststoffbauteils, umfassend ein Spritzgießwerkzeug mit einem Formhohlraum (100), welcher eine Formhohlraumöffnung (110) zum Einspritzen von Kunststoff in den Formhohlraum (100) umfasst, und einen beweglichen Werkzeugabschnitt (200), umfassend ein erstes und ein zweites Formelement (210, 220), wobei in einem Füllzustand (P1) zwischen dem ersten und dem zweiten Formelement (210, 220) ein Angusskanal (300) mit einer Kanalöffnung (310) ausgebildet ist, wobei die Kanalöffnung (310) eine Öffnungsweite (311) aufweist, wobei die Kanalöffnung (310) und die Formhohlraumöffnung (110) im Füllzustand (P1) derart zueinander angeordnet sind, dass Kunststoff von dem Angusskanal (300) in den Formhohlraum (100) einführbar ist, und wobei der bewegliche Werkzeugabschnitt (200) in Richtung einer Verschieberichtung (X) verschiebbar ist, wobei das erste Formelement (210) zumindest einen Teil einer Abscherfläche (400) zum Abtrennen eines in dem Angusskanal (300) vorhandenen Angusses aufweist, welche Abscherfläche (400) unmittelbar an der Kanalöffnung (310) anschließt und sich parallel zur Verschieberichtung (X) des beweglichen Werkzeugabschnittes (200) erstreckt, wobei zum Abtrennen des Angusses der bewegliche Werkzeugabschnitt (200) in einen Abtrennzustand (P2) überführbar ist, wobei das erste und das zweite Formelement (210, 220) unter Beibehaltung der Öffnungsweite (311) soweit in Richtung der Verschieberichtung (X) verschiebbar sind, sodass die Abscherfläche (400) die Formhohlraumöffnung (110) vollständig verschließt.

## Beschreibung

Die Erfindung betrifft eine Vorrichtung zur Herstellung eines Kunststoffbauteils, umfassend ein Spritzgießwerkzeug mit einem Formhohlraum, welcher eine Formhohlraumöffnung zum Einspritzen von Kunststoff in den Formhohlraum zur Bildung des Kunststoffbauteils umfasst, und einen beweglichen Werkzeugabschnitt, umfassend ein erstes und ein zweites Formelement, wobei in einem Füllzustand des Spritzgießwerkzeuges zwischen dem ersten und dem zweiten Formelement ein Angusskanal mit einer Kanalöffnung zur Zuführung von Kunststoff ausgebildet ist, wobei die Kanalöffnung eine Öffnungsweite aufweist, wobei die Kanalöffnung und die Formhohlraumöffnung im Füllzustand derart zueinander angeordnet sind, dass Kunststoff von dem Angusskanal in den Formhohlraum einführbar ist, und wobei der bewegliche Werkzeugabschnitt in Richtung einer Verschieberichtung verschiebbar ist.

Zur Herstellung von Kunststoffbauteilen kommen in der Regel Spritzgussverfahren zum Einsatz, wobei eine noch nicht feste bzw. ausgehärtete Kunststoffmasse - auch Kunststoffschmelze genannt - in einen Formhohlraum eingespritzt wird, um danach auszuhärten. Der Formhohlraum - oder auch Kavität genannt - bestimmt dabei die Form und die Oberflächenbeschaffenheit des herzustellenden Bauteils.

Nachdem die Kunststoffmasse ausgehärtet ist, wird diese von dem Formhohlraum getrennt, welcher Formhohlraum üblicherweise aus zumindest zwei, wieder lösbaren Werkzeugen gebildet ist.

Zum Einspritzen der Kunststoffmasse kann ein sogenannter Heißkanal oder ein sogenannter Kaltkanal vorgesehen sein, wobei Kaltkanalsysteme im Gegensatz zu Heißkanalsystemen keine Wärme zugeführt werden, um die Schmelztemperatur der Kunststoffmasse konstant zu halten. Bei der Verarbeitung von beispielsweise thermoplastischen Kunststoffen kann die Schmelze so im Kaltkanal erstarren und muss vor der Herstellung eines weiteren Bauteils entfernt werden.

Der Anguss ist die Stelle, an der die Kunststoffschmelze vom Zuführsystem in die eigentliche Form bzw. in den Formhohlraum eintritt. Sie kann als Kaltkanal oder als Heißkanal ausgeführt sein. Im Gegensatz zum Kaltkanal sorgt ein Heißkanal dafür, dass die Schmelze auf dem Weg zur Form keine Temperatur verliert.

Fast immer wird eine automatische Abtrennung des Angusses vom Bauteil gewünscht, wobei die Geometrie des Angusses beispielsweise in einem Kaltkanal bzw. Kaltverteiler von entscheidender Bedeutung ist, da sie unter anderem die Bauqualität des herzustellenden Bauteils beeinflusst.

So gibt es Kaltkanalsysteme, welche die Entformung des Angusses derart vornehmen, dass es zu einem Angussüberstand kommt. Dieser ist durch Bruchstellen und/oder unsauberen Kanten zu sehen. Beispielsweise kann auch ein sogenannter Grat entsteht. Ein Grat ist ein kantiger hervorstehender Rand eines hergestellten Bauteils, der z.B. durch zu große Spalten oder eine zu geringe Schließkraft beim Kaltkanal entstehen kann.

Ein solches Kaltkanalsystem ist beispielsweise in der DE 10 2008 030 823 A1 gezeigt. Hierbei wird ein Angussschieber derart verschoben, um die Kanalöffnung soweit zu reduzieren, dass die Kanalöffnung im optimalen Fall eine Öffnungsweite von Null beträgt, um den im übrigen Kaltkanal vorhandenen Anguss entfernen zu können. Dabei kann allerdings durch eine zu geringe Schließkraft oder langsame Schließgeschwindigkeit dennoch ein Grat am Kunststoffbauteil entstehen, welcher - wie oben bereits erwähnt - unerwünscht ist und einen Nachbearbeitungsprozess unvermeidbar macht.

Es ist eine Aufgabe der Erfindung eine Vorrichtung zur Herstellung eines Kunststoffbauteils bereitzustellen, welche die oben genannten Nachteile aus dem Stand der Technik überwindet.

Diese Aufgabe wird dadurch gelöst, dass das erste Formelement zumindest einen Teil einer Abscherfläche zum Abtrennen eines in dem Angusskanal vorhandenen Angusses aufweist, welche Abscherfläche unmittelbar an der Kanalöffnung anschließt und sich parallel zur Verschieberichtung des beweglichen Werkzeugabschnittes erstreckt,
wobei zum Abtrennen des Angusses der bewegliche Werkzeugabschnitt von dem Füllzustand in einen Abtrennzustand überführbar ist, wobei das erste und das zweite Formelement unter Beibehaltung der Öffnungsweite der Kanalöffnung gemeinsam soweit in Richtung der Verschieberichtung verschiebbar sind, sodass die Abscherfläche die Formhohlraumöffnung vollständig verschließt.

Dies hat den Vorteil, dass der Anguss nicht direkt an der Bauteilkante anbindet und somit eine Beschädigung dieser verhindert wird. Ferner können dadurch kostenintensive Nachbearbeitungsschritte vermieden werden.

Unter dem Begriff "parallel zur Verschieberichtung" in Bezug auf die Abscherfläche ist auch eine gewisse Entformschräge von 0° bis 3° inbegriffen.

Es kann vorgesehen sein, dass das erste und das zweite Formelement im Abtrennzustand voneinander lösbar sind.

Es kann vorgesehen sein, dass der Angusskanal ein Kaltkanal ist.

Es kann vorgesehen sein, dass das erste Formelement die Abscherfläche vollständig umfasst.

Es kann vorgesehen sein, dass die Formhohlraumöffnung eine Öffnungsweite aufweist, wobei die Abscherfläche größer ist als die Öffnungsweite der Formhohlraumöffnung.

Nachfolgend wird die Erfindung anhand von beispielhaften Zeichnungen näher erläutert. Hierbei zeigt
Fig. 1 eine Querschnittsansicht von einer beispielhaften Vorrichtung in einem Füllzustand mit einem Spritzgusswerkzeug, welches einen beweglichen Werkzeugabschnitt mit einem ersten und einem zweiten Formelement umfasst, wobei der bewegliche Werkzeugabschnitt in eine Verschieberichtung verschiebbar ist, und
Fig. 2 eine Querschnittsansicht der beispielhaften Vorrichtung aus Fig. 1, wobei sich die Vorrichtung in einem Abtrennzustand befindet, wobei der bewegliche Werkzeugabschnitt in die Verschieberichtung verschoben ist.

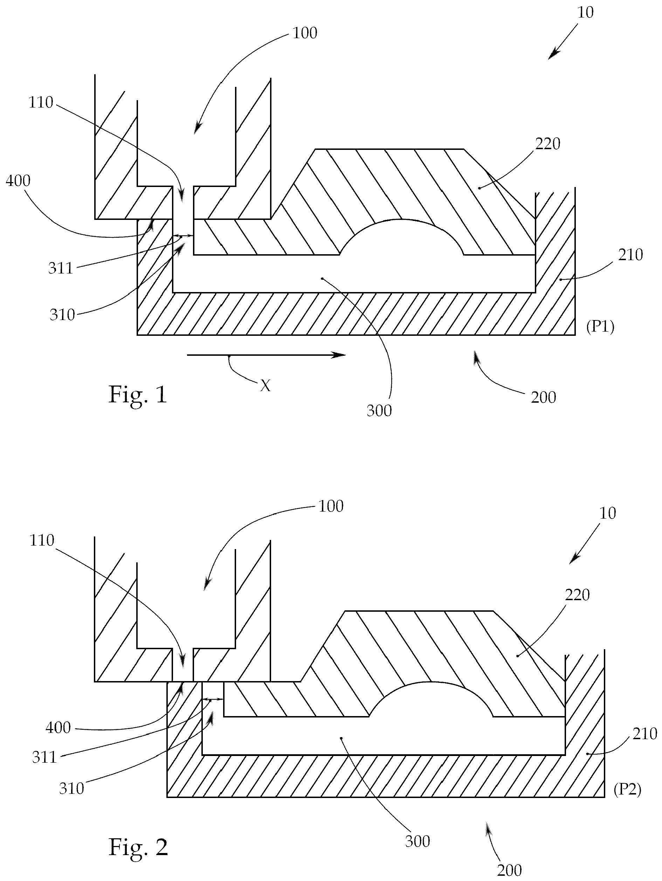

**Fig. 1** zeigt eine beispielhafte Vorrichtung **10** zur Herstellung eines Kunststoffbauteils, umfassend ein Spritzgießwerkzeug mit einem Formhohlraum **100,** welcher eine Formhohlraumöffnung **110** zum Einspritzen von Kunststoff in den Formhohlraum **100** zur Bildung des Kunststoffbauteils umfasst.

Ferner umfasst die Vorrichtung **10** einen beweglichen Werkzeugabschnitt **200,** umfassend ein erstes und ein zweites Formelement **210, 220,** wobei in einem Füllzustand **P1** des Spritzgießwerkzeuges, welcher Füllzustand **P1** in **Fig. 1** dargestellt ist, zwischen dem ersten und dem zweiten Formelement **210, 220** ein Angusskanal **300** mit einer Kanalöffnung **310** zur Zuführung von Kunststoff ausgebildet ist, wobei der Angusskanal **300** in dem gezeigten Beispiel als Kaltkanal fungiert. Die Kanalöffnung **310** weist dabei eine Öffnungsweite **311** auf, wobei die Kanalöffnung **310** und die Formhohlraumöffnung **110** im Füllzustand **P1** derart zueinander angeordnet sind, dass Kunststoff von dem Angusskanal **300** in den Formhohlraum **100** einführbar ist, wie in **Fig. 1** zu sehen ist, und wobei der bewegliche Werkzeugabschnitt **200** in Richtung einer Verschieberichtung **X** verschiebbar ist.

Ferner weist das erste Formelement **210** in dem gezeigten Beispiel eine Abscherfläche **400** zum Abtrennen eines in dem Angusskanal **300** vorhandenen Angusses auf, welche Abscherfläche **400** unmittelbar an der Kanalöffnung **310** anschließt und sich parallel zur Verschieberichtung **X** des beweglichen Werkzeugabschnittes **200** erstreckt.

Zum Abtrennen des Angusses ist der bewegliche Werkzeugabschnitt **200** von dem Füllzustand **P1** in einen Abtrennzustand **P2**, welcher in **Fig. 2** dargestellt ist, überführbar, wobei das erste und das zweite Formelement **210, 220** unter Beibehaltung der Öffnungsweite **311** der Kanalöffnung **310** gemeinsam soweit in Richtung der Verschieberichtung **X** verschiebbar sind, sodass die Abscherfläche **400** die Formhohlraumöffnung **110** vollständig verschließt. Die Abscherfläche **400** ist in dem gezeigten Beispiel größer als die Öffnungsweite der Formhohlraumöffnung **110,** damit ein Abtrennen des Angusses ohne Beschädigungen der Bauteilkante möglich ist.

In dem Abtrennzustand **P2** ist das erste und das zweite Formelement **210, 220** voneinander lösbar.

**LISTE DER BEZUGSZEICHEN**

| | |
|---|---|
| Vorrichtung | 10 |
| Formhohlraum | 100 |
| Formhohlraumöffnung | 110 |
| Beweglicher Werkzeugabschnitt | 200 |
| Erstes Formelement | 210 |
| Zweites Formelement | 220 |
| Angusskanal | 300 |
| Kanalöffnung | 310 |
| Öffnungsweite | 311 |
| Abscherfläche | 400 |
| Füllzustand | P1 |
| Abtrennzustand | P2 |
| Verschieberichtung | X |

## Patentansprüche

1. Vorrichtung (10) zur Herstellung eines Kunststoffbauteils, umfassend ein Spritzgießwerkzeug mit einem Formhohlraum (100), welcher eine Formhohlraumöffnung (110) zum Einspritzen von Kunststoff in den Formhohlraum (100) zur Bildung des Kunststoffbauteils umfasst, und einen beweglichen Werkzeugabschnitt (200), umfassend ein erstes und ein zweites Formelement (210, 220), wobei in einem Füllzustand (P1) des Spritzgießwerkzeuges zwischen dem ersten und dem zweiten Formelement (210, 220) ein Angusskanal (300) mit einer Kanalöffnung (310) zur Zuführung von Kunststoff ausgebildet ist, wobei die Kanalöffnung (310) eine Öffnungsweite (311) aufweist, wobei die Kanalöffnung (310) und die Formhohlraumöffnung (110) im Füllzustand (P1) derart zueinander angeordnet sind, dass Kunststoff von dem Angusskanal (300) in den Formhohlraum (100) einführbar ist, und wobei der bewegliche Werkzeugabschnitt (200) in Richtung einer Verschieberichtung (X) verschiebbar ist,
**dadurch gekennzeichnet, dass**
das erste Formelement (210) zumindest einen Teil einer Abscherfläche (400) zum Abtrennen eines in dem Angusskanal (300) vorhandenen Angusses aufweist, welche Abscherfläche (400) unmittelbar an der Kanalöffnung (310) anschließt und sich parallel zur Verschieberichtung (X) des beweglichen Werkzeugabschnittes (200) erstreckt,
wobei zum Abtrennen des Angusses der bewegliche Werkzeugabschnitt (200) von dem Füllzustand (P1) in einen Abtrennzustand (P2) überführbar ist, wobei das erste und das zweite Formelement (210, 220) unter Beibehaltung der Öffnungsweite (311) der Kanalöffnung (310) gemeinsam soweit in Richtung der Verschieberichtung (X) verschiebbar sind, sodass die Abscherfläche (400) die Formhohlraumöffnung (110) vollständig verschließt.

2. Vorrichtung nach Anspruch 1, **dadurch gekennzeichnet, dass** das erste und das zweite Formelement (210, 220) im Abtrennzustand (P2) voneinander lösbar sind.

3. Vorrichtung nach Anspruch 1 oder 2, **dadurch gekennzeichnet, dass** der Angusskanal (300) ein Kaltkanal ist.

4. Vorrichtung nach einem der Ansprüche 1 bis 3, **dadurch gekennzeichnet, dass** das erste Formelement (210) die Abscherfläche (400) vollständig umfasst.

5. Vorrichtung nach einem der Ansprüche 1 bis 4, **dadurch gekennzeichnet, dass** die Formhohlraumöffnung (110) eine Öffnungsweite aufweist, wobei die Abscherfläche (400) größer ist als die Öffnungsweite der Formhohlraumöffnung (110).
